Europäisches Patentamt

European Patent Office

Office européen des brevets

(11) Veröffentlichungsnummer: **0 402 612**

**A1**

(12) **EUROPÄISCHE PATENTANMELDUNG**

(21) Anmeldenummer: 90108493.9

(22) Anmeldetag: 07.05.90

(51) Int. Cl.⁵: **G02B 6/32**

(30) Priorität: 15.06.89 DE 3919531

(43) Veröffentlichungstag der Anmeldung:
19.12.90 Patentblatt 90/51

(84) Benannte Vertragsstaaten:
BE ES FR GB IT NL

(71) Anmelder: ANT Nachrichtentechnik GmbH
Gerberstrasse 33
D-7150 Backnang(DE)

(72) Erfinder: Klinger, Siegfried, Ing.
Heininger Weg 57
D-7150 Backnang(DE)
Erfinder: Ebele, Günter, Ing.
Wilhelm-Busch-Strasse 12/4
D-7150 Backnang(DE)
Erfinder: Eckardt, Fritz, Ing.
In den Badwiesen 7
D-7155 Oppenweiler(DE)
Erfinder: Stahl, Otto, Ing.
Karlsbader Strasse 13
D-7155 Oppenweiler(DE)
Erfinder: Anderka, Heinz-Jörg, Ing.
Tulpenweg 6
D-7163 Oberrot(DE)

(54) **Formstück für einen Lichtwellenleiterstecker zur Aufnahme eines oder mehrerer Lichtwellenleiter.**

(57) Es wird ein Formstück für einen Lichtwellenleiterstecker mit Schutzglas (2) beschrieben, in dem
Kugellinsen (3a, 3b) in trichterförmigen Öffnungen
gehalten werden und Lichtleitfaserenden in zylindrischen Aufnahmen (4a, 4b) über Abstandshülsen (6a,
6b) mit Hilfe einer Vorrichtung gegen die Kugellinsen
gedrückt werden.

EP 0 402 612 A1

Formstück für einen Lichtwellenleiterstecker zur Aufnahme eines oder mehrerer Lichtwellenleiter

Die Erfindung betrifft ein Formstück für einen Lichtwellenleiterstecker.

Aus der EP 0206 943 A2 Figur 3 und zugehörige Beschreibung ist ein Formstück für einen Lichtwellenleiterstecker zur Aufnahme von Lichtwellenleitern bekannt, bei dem an der dem Lichtwellenleiterkabel abgewandten Seite eine Ausnehmung vorgesehen ist, in der eine Scheibe aus lichtdurchlässigem Material senkrecht zur Achse des Formstücks gehaltert ist, die diese Ausnehmung abdeckt, wobei hinter dieser Scheibe eine Kugellinse in einem Kugelbett angebracht ist, und die in einer zylindrischen Hülse befestigten Lichtleitfaser mit ihrem polierten Ende in dem Brennpunkt der ihr zugeordneten Kugellinse gehalten wird, bei dem weiter im Boden der Ausnehmung eine trichterförmige Bohrung als Kugelbett vorgesehen ist und der Trichter zu der dem Lichtwellenleiterkabel zugewandten Seite in einer zylindrischen Bohrung ausläuft, deren Achse parallel zur Achse des Formstücks verläuft.

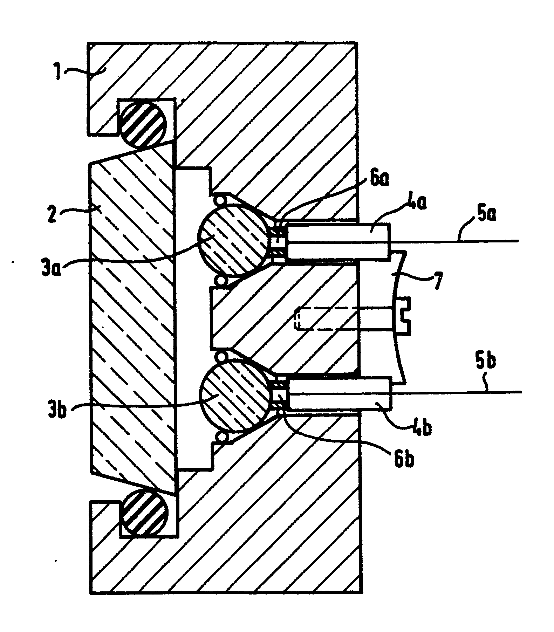

Weiter ist aus der DE 37 29 085 A1 ein aus mehreren Teilen zusammengesetztes Formstück nur für die Aufnahme eines einzigen Lichtwellenleiters bekannt (Figur 4). Dabei ist der Lichtwellenleiter in einer Faserendhülse gefaßt, die wiederum mit Hile eines O-Ringes in einer Kabelhülse festgehalten wird. Die Stirnseite des Lichtwellenleiters wird mit Hilfe der Ausgestaltung eines Kugelbettes, einem Fortsatz an der Faserendhülse und einer dazu passenden Bohrung so festgehalten, daß sie, nämlich die Stirnseite, im Brennpunkt der Kugellinse bleibt.

Das bedeutet, daß bei den beiden vorbeschriebenen Formstücken sowohl Kugelbett als auch Faserendhülse, insbesondere der Fortsatz und die dazu passende Bohrung mit extremer Genauigkeit gefertigt werden müssen.

Aufgabe der vorliegenden Erfindung ist es, ein Formteil für einen Lichtwellenleiterstecker so auszubilden, daß in jeder Lage und bei jeder Temperatur die Stirnseite der Faser sich im Brennpunkt der Kugellinse befindet. Diese Aufgabe wird gelöst, wie im Patentanspruch 1 beschrieben. Weitere vorteilhafte Ausgestaltungen sind in den Unteransprüchen angegeben.

Anhand der Figur soll die Erfindung näher erläutert werden.

In dem Formstück 1 ist in einer Ausnehmung die Scheibe 2 aus lichtdurchlässigem Material mit Hilfe eines Sprengringes gehalten. Am Boden der Ausnehmung sind trichterförmige Öffnungen angebracht, in denen, ebenfalls mit Sprengringen, die Kugellinsen 3a und 3b befestigt sind. Die Lichtleitfasern 5a und 5b sind in Hülsen 4a und 4b gehalten. Von der Kabelseite (in der Figur von rechts) sind diese Hülsen durch die Bohrungen zu den Trichterböden geschoben. Der Abstand der polierten Enden der Lichtleitfasern 5a und 5b wird durch die zylinderförmigen Abstandshülsen 6a und 6b eingestellt. Durch die federnde Vorrichtung 7 werden die Hülsen 4a und 4b, in denen die Lichtleitfasern gehaltert sind, gegen die zylinderförmigen Abstandshülsen 6a und 6b gedrückt.

Ansprüche

1. Formstück für einen Lichtwellenleiterstecker zur Aufnahme eines oder mehrerer Lichtwellenleiter, bei dem an der dem Lichtwellenleiterkabel abgewandten Seite eine Ausnehmung vorgesehen ist, in der eine Scheibe aus lichtdurchlässigem Material senkrecht zur Achse des Formstücks gehaltert ist, die diese Ausnehmung abdeckt, wobei hinter dieser Scheibe so viele Kugellinsen, wie Lichtleitfasern vorgesehen sind, in je einem Kugelbett angebracht sind, die als trichterförmige Bohrungen im Boden der Ausnehmung ausgebildet sind, wobei der oder die Trichter zu der dem Lichtwellenleiterkabel zugewandten Seite in zylindrische Bohrungen auslaufen, deren Achsen parallel zur Achse des Formstücks (1) verlaufen, daß in diese oder diesen Bohrungen zylindrische Aufnahmen (4a, 4b) radial spielfrei und axial beweglich angeordnet sind, in denen die Lichtleitfasern befestigt sind, die mit ihren polierten Enden dadurch in den Brennpunkten der ihnen zugeordneten Kugellinsen gehalten werden, daß zwischen Kugellinse und Lichtleitfaserende je ein hohlzylindrisches Abstandsstück (6a, 6b) angebracht ist und daß auf dem dem Lchtwellenleiterkabel zugewandten Ende des Formstücks (1) eine Vorrichtung angebracht ist, die die zylindrischen Aufnahmen (4a, 4b) gegen die Kugellinse drückt.

2. Formstück nach Anspruch 1, dadurch gekennzeichnet, daß die Vorrichtung (7), die die zylindrischen Aufnahmen gegen die Kugellinsen drückt, Spiralfedern enthält.

3. Formstück nach Anspruch 1, dadurch gekennzeichnet, daß die Vorrichtung (7), die die zylindrischen Aufnahme gegen die Kugellinse drückt, Blattfedern enthält.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | GB-A-2 097 149 (MALCO) <br> * Abbildung 4; Seite 6, Zeilen 15-41 * <br> --- | 1 | G 02 B 6/32 |
| A | EP-A-0 305 832 (GEBRUEDER SCHMIDT FABRIK FUER FEINMECHANIK) <br> * Abbildungen 4,5; Spalte 11, Zeile 20 - Spalte 12, Zeile 3 * <br> --- | 1 | |
| A | FR-A-2 622 704 (SOCIETA CAVI PIRELLI) <br> * Abbildung 2; Seite 8, Zeilen 8-34 * <br> --- | 1 | |
| A | DE-U-8 704 678 (CARL ZEISS) <br> * Abbildung 2 * <br> --- | 1 | |
| A | PATENT ABSTRACTS OF JAPAN <br> Band 9, Nr. 64, (P-343)(1787), 23 März 1985; & JP-A-59198412 (FUJITSU) <br> 10.11.1984 <br> ----- | 1 | |

RECHERCHIERTE SACHGEBIETE (Int. Cl.5)

G 02 B 6/32
G 02 B 6/36
G 02 B 6/38

Der vorliegende Recherchenbericht wurde für alle Patentansprüche erstellt

| Recherchenort | Abschlußdatum der Recherche | Prüfer |
|---|---|---|
| BERLIN | 20-06-1990 | FUCHS R |